# EUROPÄISCHE PATENTSCHRIFT

(11) **EP 1 441 937 B1**
(45) Veröffentlichungstag und Bekanntmachung des Hinweises auf die Patenterteilung: **12.07.2006**
(21) Anmeldenummer: 02781150.4
(22) Anmeldetag: 04.11.2002
(51) Int. Cl.: B60T 8/00, G01P 3/489

(54) **AUSWERTESCHALTUNG FÜR EINEN INDUKTIVEN SENSOR**
ANALYTICAL CIRCUIT FOR AN INDUCTIVE SENSOR
CIRCUIT D'EVALUATION CON U POUR UN CAPTEUR INDUCTIF

(30) Priorität: 07.11.2001 DE 10154642
(43) Veröffentlichungstag der Anmeldung: 04.08.2004
(73) Patentinhaber: SIEMENS AKTIENGESELLSCHAFT, 80333 München (DE)
(72) Erfinder: BOLZ, Stephan, 93102 Pfatter (DE)
(86) Internationale Anmeldenummer: PCT/DE2002/004088
(87) Internationale Veröffentlichungsnummer: WO 2003/039926

(56) Entgegenhaltungen:
- EP-A- 0 973 258
- DE-A- 3 543 058
- DE-A- 10 030 485
- DE-A- 19 707 263
- DE-A- 19 924 113
- US-A- 6 100 680

## Beschreibung

Die Erfindung betrifft eine Auswerteschaltung für einen induktiven Sensor einer Welle, insbesondere für einen Sensor zur Erfassung des Drehverhaltens der Kurbelwelle einer Kraftfahrzeug-Brennkraftmaschine, nach dem Oberbegriff des Anspruchs 1.

Zum Betrieb einer Kraftfahrzeug-Brennkraftmaschine ist die exakte Kenntnis des Drehverhaltens (Winkelposition, Winkelgeschwindigkeit-Drehzahl, Bescheunigung) der Kurbel- oder Nockenwelle erforderlich. Eine elektronische Motorsteuerung kann damit unter anderem die richtigen Zeitpunkte für Kraftstoffeinspritzung und Zündung ermitteln. Diese Größen sind beispielsweise auch für die Steuerung von Getriebeautomaten oder Antiblockiersystemen von Bedeutung.

Im Rahmen motortechnischer Weiterentwicklung werden diese Daten zunehmend zur Ermittlung abgeleiteter Größen herangezogen. Ein Beispiel dafür ist die vom Gesetzgeber geforderte, abgasrelevante Erkennung,von Zündaussetzern (misfire detection). Während eines Verbrennungsvorgangs (Arbeitstakt) in einem Zylinder erfährt die Kurbelwelle eine Beschleunigung, was eine Erhöhung deren Winkelgeschwindigkeit bewirkt. Findet keine Verbrennung statt, beispielsweise infolge fehlender Zündung, so fehlt diese Erhöhung der Winkelgeschwindigkeit.

Die Beobachtung der Winkelgeschwindigkeits-Änderung (Beschleunigung) über den Arbeitstakt gibt demnach Aufschluss über eine erfolgreiche Verbrennung. Von Bedeutung ist dabei, dass nicht die gemessene Größe, sondern eine davon abgeleitete Größe verwendet wird. Erschwerend wirkt sich dabei aus, dass das Verhältnis von abgeleiteter Größe zu gemessener Größe extrem klein ist, ~0.001.

Diese Bedingungen stellen Anforderungen an die Erfassungsgenauigkeit des Messsystems, die mit bekannten, für den Einsatz in Kraftfahrzeugen geeigneten Sensoren kaum noch zu erfüllen sind.

Die hohen Anforderungen an Robustheit, Verträglichkeit gegenüber Verschmutzung und hohen Temperaturen haben zu einem weitgehenden Einsatz von Magnetsensoren geführt. Diese bestehen aus einem Permanentmagneten mit einem Joch aus ferromagnetischem Material (Eisen) zur Erzeugung und Führung eines statischen Magnetfeldes. An der zu messenden Welle ist ein Zahnrad so befestigt, dass die Zähne in das statische Magnetfeld hineinragen. Der Wechsel von Zahn und Lücke des bewegten Zahnrades bewirkt eine Änderung des Magnetfeldes, die vom Sensor erfasst wird.

Ein passives Magnetsensor-System (Permanentmagnet mit Eisenjoch zur Erzeugung und Führung des statischen Magnetfeldes und Sensorspule, in welcher infolge von Änderungen des Magnetfeldes ein Wechselspannungssignal induziert wird) hat aber einige Nachteile.

So ist die Amplitude des Sensor-Spannungssignals etwa proportional zur Frequenz (~0.1V - 100V bei 20 - 6000Hz), mit welcher die Zähne des Zahnrades am Sensor vorbeilaufen. Eine präzise Erkennung der Nulldurchgänge des Sensorsignals in einem so weiten Bereich ist sehr schwer durchführbar. Es sind teure, verdrillte und geschirmte Leitungen erforderlich. Kleine Minimalamplituden des Sensorsignals machen eine aufwendige Signalführung erforderlich, und die Gefahr von EMV-Störsignaleinkopplungen steigt.

Dieses Sensorsystem erlaubt nur begrenzte Diagnosemöglichkeiten bei Sensor- oder Leitungsfehlern. Die große Amplitudendynamik lässt eine einfache Erkennung von Leitungsunterbrechungen durch Schwellwerterkennung nicht zu.

Außerdem wird die Amplitude des Sensorsignals durch die Stärke des vom Permanentmagneten erzeugten Feldes beeinflusst. Der Magnet muss dementsprechend eng toleriert sein, was die Kosten weiter erhöht.

Eine Verbesserung der Erfassungsgenauigkeit des Sensorsignals kann durch Messung des Sensorstromes erfolgen, da dessen Amplitude für Zahnfolgefrequenzen oberhalb der (durch die L/R-Zeitkonstante gegebenen) Eckfrequenz - im Gegensatz zur Sensorspannung - annähernd konstant ist. Dadurch lässt sich der durch die Auswerteelektronik verursachte Fehlerbeitrag zur Erfassungsgenauigkeit wesentlich reduzieren.

Bei Sensoren mit Permanentmagneterregung ergibt sich allerdings das Problem, dass bei Strommessung - und dem dafür erforderlichen Kurzschluss des Sensors - der im Sensor selbst erzeugte Strom ein Gegenfeld erzeugt, das dem vom Permanentmagnet erzeugten Feld entgegengesetzt ist.

Betreibt man nun den Sensor bei hoher Temperatur und starker mechanischer Vibration, so besteht die Gefahr, dass der Permanentmagnet langsam entmagnetisiert wird, wodurch der Sensor letztlich seine Funktion verliert. Auch ohne dieses Gegenfeld verliert ein typischer Kurbelwellensensor ca. 30% seiner Magnetisierung während seiner Lebensdauer.

Alternativ kann man auch einen elektromagnetischen Sensor mit Fremderregung betreiben. Man ersetzt hierbei den Permanentmagneten durch weichmagnetisches Material, beispielweise Dynamoblech, und prägt der Sensorspule einen Konstantstrom auf, welcher das Material dann magnetisiert, wie z.B. in der DE 10030485 A angesprochen. Eine schleichende Entmagnetisierung findet hier nicht statt. In der Wirkung sind Sensoren mit Permanenterregung und Fremderregung funktionsgleich.

Aus JP 4-223272 A ist eine Auswerteschaltung für einen elektromagnetischen Sensor bekannt, der mittels eines Koppelkondensators mit dem invertierenden Eingang eines invertierenden Verstärkers verbunden ist. Am Ausgang des Verstärkers erscheint eine Spannung, deren Gleichspannungspotential durch eine am nichtinvertierenden Eingang anliegende Referenzspannung bestimmt wird. Die Wechselspannung am Eingang des Sensors ist bei geeigneter Größe des Koppelkondensators sehr klein (nur einige mV Spitze-Spitze). Problematisch bei diesem Konzept ist der in der Praxis benötigte Wert des Koppelkondensators. Er muss mehr als 1000µF betragen, um bei einer geforderten minimalen Zahnfolgefrequenz von beispielsweise 20Hz (Startvorgang der Brennkraftmaschine) noch hinreichend niederohmig zu sein. Eine zu große Impedanz des Kondensators hätte eine Wechselspannung am Sensor zur Folge, wodurch die untere Eckfrequenz des Sensors nach oben verschoben würde. Zudem muss der Kondensator für ca. 20V Spannungsfestigkeit ausgelegt werden, damit im Fehlerfall, etwa ein Kurzschluss nach Batteriespannung, keine Beschädigung auftritt. Auch muss er - wie in der Kraftfahrzeug-Elektronik üblich - für Temperaturen von bis zu 125°C Dauerbetrieb ausgelegt sein. Ein Kondensator dieser Bauform ist einerseits sehr teuer, andererseits inakzeptabel groß. Des weiteren weist diese Schaltung einen als Schmitt-Trigger geschalteten Operationsverstärker auf, der das analoge Ausgangssignal in ein digitales Signal, beispielsweise ein Rechtecksignal umwandelt, damit es von einer nachfolgenden digitalen Frequenzauswerteeinheit verarbeitet werden kann.

Allerdings bedingt die mit dem Schmitt-Trigger verbundene Hysterese bei der Detektion der Spannungsnulldurchgänge eine zeitliche Verschiebung der Umschaltpunkte, welche zudem von der Amplitude des Eingangssignals abhängt. Das bringt keine Verbesserung der Messgenauigkeit und ist deshalb nicht akzeptabel. Aus den genannten Gründen ist die bekannte Schaltung für Kraftfahrzeug-Anwendungen ungeeignet.

Es ist Aufgabe der Erfindung, eine kostengünstigere Auswerteschaltung für einen induktiven Sensor zu schaffen, welches bei erhöhter EMV-Sicherheit eine durch Hysterese bewirkte zeitliche Verzögerung des Sensorsignals und Mehrfachtriggerungen vermeidet und eine einfache Diagnose des Sensors bezüglich Kurzschluss und Leitungsunterbrechung ermöglicht.

Diese Aufgabe wird erfindungsgemäß durch eine Auswerteschaltung gemäß den Merkmalen des Anspruchs 1 gelöst.

Ein Ausführungsbeispiel nach der Erfindung wird nachstehend anhand einer schematischen Zeichnung näher erläutert. In der Zeichnung zeigen:
- Figur 1: den prinzipiellen Schaltungsaufbau einer erfindungsgemäßen Auswerteschaltung, und
- Figur 2: verschiedene Signalverläufe dieser Schaltung.

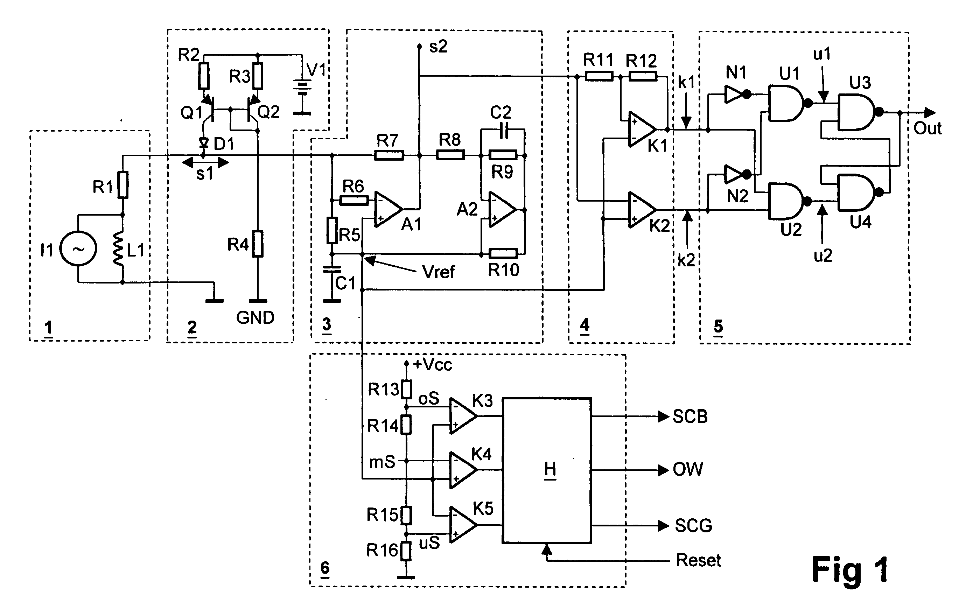

Figur 1 zeigt, gestrichelt eingerahmt, einen durch Gleichstrom fremderregten Sensor 1 als Wechselstromquelle I1, die zugleich den Sensor-Kurzschlussstrom repräsentiert. Die dazu parallelgeschaltete Induktivität L1 repräsentiert die Sensorinduktivität, während der dazu in Reihe liegende Widerstand R1 den Wicklungswiderstand darstellt, an dem bei Fremderregung mit Gleichstrom eine Gleichspannung abfällt, die als Bezugspunkt für die Referenzspannung der Auswerteschaltung verwendet wird.

Wird der Sensor 1 ohne Ausgangslast betrieben, so steigt die Wechselspannung proportional zur Frequenz an, da die Impedanz der Induktivität L1 (=2πL) stetig wächst und durch die Wechselstromquelle I1 ein immer größerer Spannungsabfall entsteht. Wird der Sensor im Kurzschluss betrieben, so ergibt sich ein Stromteiler zwischen Sensorinduktivität L1 und Wicklungswiderstand R1. Oberhalb der Eckfrequenz ω₀=L1/R1 wird die Impedanz so groß, dass der Sensorstrom 11 hauptsächlich durch den Wicklungswiderstand R1 fließt.

Die Konstantstromquelle 2 zur Fremderregung des Sensors 1 aus einer Versorgungsspannungsquelle V1 (beispielsweise 5V) besteht aus einem Stromspiegel (Q1, Q2, R2 und R3) mit Verpolschutzdiode D1 im Ausgang.

Zwei Transistoren Q1 und Q2,deren Basisanschlüsse miteinander verbunden sind und deren Emitteranschlüsse über je einen Widerstand R2, R3 mit der Versorgungsspannungsquelle V1 verbunden sind, bilden den Stromspiegel. Basis und Kollektor von Transistor Q2 sind miteinander verbunden, so das dieser als Diode wirkt, und über einen Widerstand R4 mit Bezugsspannungspotential GND verbunden.

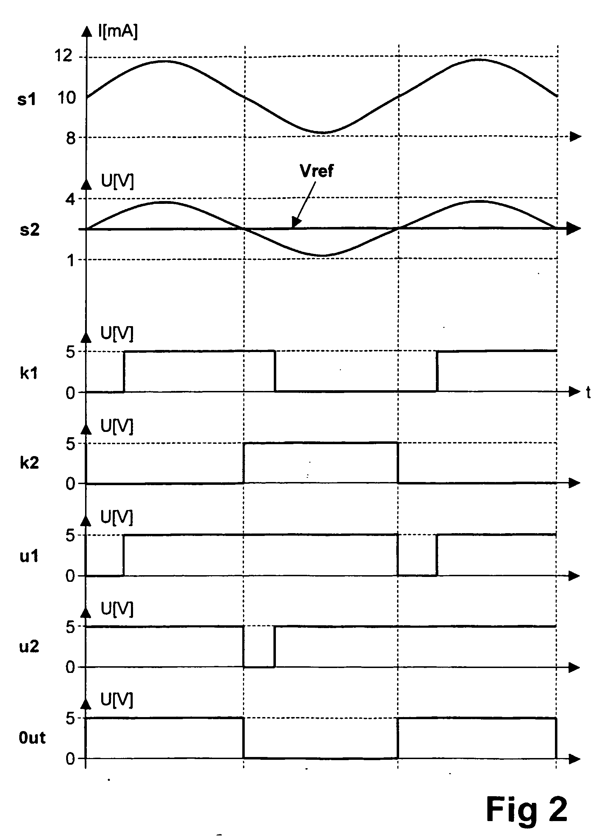

Der Strom durch die Reihenschaltung von R3, Q2 und R4 ist durch die Werte der Widerstände und den Spannungsabfall an Q2 bestimmt. Wählt man R3 zu 50Ω und R4 zu 370Ω, so wird bei Versorgung mit 5V ein Strom von ca. 10mA fließen. Wählt man nun R2 ebenfalls zu 50Ω, so werden durch den Transistor Q1 und die Diode D1 ebenfalls 10mA fließen - und zwar weitgehend unabhängig vom Kollektorpotential von Q1. Die Diode D1 verhindert eine Verpolung von Q1 bei Kurzschluss der Sensorleitung nach Batterie und vermeidet so dessen Zerstörung. Der Kollektorstrom von Q1 fließt als Erregerstrom in den Sensor 1 und erzeugt am Wicklungswiderstand R1 einen Gleichspannungsabfall von beispielsweise 2,5V, dem dann der Sensorwechselstrom (Signal s1 in Figur 2) überlagert ist.

Die Summe von Sensor-Gleich- und -Wechselstrom bildet das Sensorausgangssignal s1, welches einem nachfolgenden Transkonduktanzverstärker 3 mit geregelter Referenzspannungserzeugung zugeführt wird.

Der Transkonduktanzverstärker 3, Verstärker A1, ist mit seinem invertierenden Eingang über einen Widerstand R6 mit dem Sensor 1 und der Fremderregung 2 verbunden. Widerstand R6 schützt den Eingang des Verstärkers A1 bei Kurzschluss nach Batteriespannung. Eine Gegenkopplung erfolgt mittels eines Widerstandes R7, der den Ausgang von A1 mit dem Sensor 1 verbindet. Der nichtinvertierende Eingang von A1 ist über einen Widerstand R5 ebenfalls mit dem Sensor 1 verbunden, wobei eine Reihenschaltung von R5 und eines Kondensators C1, der zum Bezugspotential GND führt, einen Tiefpass darstellen. R5 schützt zudem den nichtinvertierenden Eingang von A1 bei Kurzschluss nach Batteriespannung. Der Ausgang von A1 ist über einen Widerstand R8 mit dem invertierenden Eingang eines Verstärkers A2 verbunden, der auch über eine Parallelschaltung eines Widerstandes R9 und eines Kondensators C2 mit dem Ausgang von A2 verbunden ist. Verstärker A2 wirkt dadurch als invertierender Tiefpass.

Der Ausgang des Verstärkers A2 ist über einen Widerstand R10 mit dem nichtinvertierenden Eingängen von A2 und A1 verbunden, so dass die Ausgangsspannung von A1, im Verstärker A2 tiefpass-gefiltert und invertiert, als Referenzspannung Vref (siehe Signal s2 in Figur 2) an die nichtinvertierenden Eingänge gelangt. Ihr Wert entspricht der am Sensor abfallenden Gleichspannung. Am Ausgang von A1 entsteht somit eine Wechselspannung, deren Größe durch das Produkt aus dem Sensorwechselstrom und dem Wert des Widerstandes R7 bestimmt ist. Durch Wahl von R7 kann man sie auf beispielsweise 3V (Spitze-Spitze) einstellen. Dadurch wird einerseits eine Spannungsbegrenzung des Ausganges von A1 vermieden, andererseits lässt sich das Signal dann einfach weiter verarbeiten. Zudem wird durch die Gegenkopplung mit R7 erreicht, dass der Sensorwechselstrom zu keiner nennenswerten Wechselspannung am Sensoreingang führt. Der Sensor ist somit wechselspannungsmäßig kurzgeschlossen.

Das am Ausgang von A1 erscheinende Sensorspannungssignal s2 (Figur 2) gelangt zur Digitalisierung an eine Digitalisierungsschaltung 4, bestehend aus einem Schmitt-Trigger K1 und aus einem parallel dazu angeordneten Spannungskomparator K2.

Das Signal s2 gelangt direkt an den invertierenden Eingang des Komparators K2 und über einen Widerstand R11 an den nichtinvertierenden Eingang des Komparators K1, der über einen weiteren Widerstand R12 mit seinem Ausgang verbunden ist. Der invertierende Eingang von K1 und der nichtinvertierende Eingang von K2 liegen an der Referenzspannung Vref.
Durch die Beschaltung mit R11 und R12 wird Komparator K1 zu einem Schmitt-Trigger mit Hysterese, deren Wert sich aus dem Verhältnis R11/R12 und der Versorgungsspannung von K1 ergibt. Am Ausgang von K1 erscheint das digitale Ausgangssignal k1 mit einer durch die Hysterese bedingten Zeitverzögerung (Signal k1 in Figur 2).

Im Komparator K2 wird Signal s2 mit der Referenzspannung Vref verglichen. Da hier keine Hysterese vorhanden ist, schaltet der Ausgang exakt bei einer Spannungsdifferenz von 0V an den Eingängen (Signal k2 in Figur 2). Bei kleinen, verrauschten Eingangssignalen kann es jedoch zu mehrmaligem Triggern (Umschalten) kommen.

Werden die Komparatoren K1 und K2, wie an sich üblich, mit einer Spannung von 5V versorgt, so sind ihre Ausgangspegel 0V und 5V, die zur weiteren. Verarbeitung in Logikgattern geeignet sind.

Die beiden Ausgangssignale k1 und k2 der Komparatoren K1 und K2 werden schließlich einer Logikschaltung 5 zur Bildung des eigentlichen Ausgangssignals Out zugeführt. Diese Logikschaltung besteht aus zwei Invertern N1 und N2, sowie aus vier NAND-Gattern U1 bis U4. Der Ausgang eines NAND-Gatters hat nur dann Low-Pegel, wenn beide Eingänge gleichzeitig High-Pegel haben. Dies gilt für die NAND-Gatter U1 bis U4.

Der Eingang des Inverters N1 und ein Eingang des NAND-Gatters U2 sind mit dem Ausgang des Schmitt-Triggers K1 verbunden. Der Eingang des Inverters N2 und der andere Eingang des Nand-Gatters U2 sind mit dem Ausgang des Komparators K2 verbunden.

Der Ausgang von N1 ist mit einem Eingang von U1 verbunden; ebenso der Ausgang von N2 mit dem anderen Eingang von U1. Der Ausgang von U1 ist auch mit einem Eingang von U3 verbunden; ebenso der Ausgang von U2 mit einem Eingang von U4. Der Ausgang von U3 ist mit dem anderen Eingang von U4 verbunden; ebenso der Ausgang von U4 mit dem anderen Eingang von U3.

Die zwei rückgekoppelten NAND-Gatter U3 und U4 bilden (nach Tietze-Schenk) ein "transparentes" RS-Flip-Flop. Der Ausgang von U3 stellt den Ausgang der Logikschaltung dar, an dem das Signal Out anliegt. Die Wahrheitstabelle dieses RS-Flip-Flops sieht folgendermaßen aus:

| u1 | u2 | Out |
|---|---|---|
| Low | Low | Nicht zulässig |
| Low | High | High |
| High | Low | Low |
| High | High | Out₋₁ |

Wie aus Figur 1 und den in Figur 2 dargestellten Signalen ersichtlich, werden die invertierten Ausgangssignale k1 des Schmitt-Triggers K1 und k2 des Komparators K2 dem NAND-Gatter U1 zugeführt, an dessen Ausgang ein durch die Hysterese des Schmitt-Triggers zeitverzögertes Signal u1 entsteht.

Die Signale k1 und k2 werden - ohne Invertierung - auch dem NAND-Gatter U2 zugeführt, dessen Ausgangssignal u2 ab der ansteigenden Flanke des Signals k2 bis zur absteigenden Flanke des Signals k1 Low-Pegel hat.

Man erhält auf diese Art zwei Signale u1 und u2, die anschließend zu dem "transparenten" RS-Flip-Flop geführt werden. Das Ausgangssignal Out dieses Flip-Flops ist High, wenn ul=Low und u2=High, und ist Low, wenn u1=High und u2=Low. Sind u1=u2=High, so wird der vorherige Zustand (Out₋₁) beibehalten. Weitere Schaltzustände, z.B. durch Mehrfachtriggerung des Komparators K2, bleiben somit ohne Wirkung.
Insgesamt ist auf diese Weise am Ausgang des NAND-Gatters U3 ein Digitalsignal Out entstanden, das phasensynchron zu den ansteigenden und abfallenden Durchgängen der Ausgangsspannung s2 des Transkonduktanzverstärkers A1 durch den Pegel der Referenzspannung Vref schaltet. Es hat
- keinen Hystereseverzug, und ist
- frei von Mehrfachtriggerungen.

Das Ausgangssignal Out der Auswerteschaltung kann nun zur Weiterverarbeitung (Frequenzerfassung etc.) beispielsweise einem nicht dargestellten Mikrokontroller zugeführt werden.

Die Diagnoseschaltung 6 für den induktiven Sensor besteht aus drei Komparatoren K3, K4 und K5, einem Spannungsteiler R13 bis R16, sowie einer Halteschaltung H.

An den nichtinvertierenden Eingängen der Komparatoren K3 und K4 sowie dem invertierenden Eingang des Komparators K5 liegt die Referenzspannung Vref. Die invertierenden Eingänge von K3 und K4, sowie der nichtinvertierende Eingang von K5 sind mit dem Spannungsteiler an jeweils unterschiedlichen Anzapfungspunkten verbunden.

Die Ausgänge der Komparatoren K3 bis K5 sind mit den Eingängen der Halteschaltung H verbunden, deren Ausgänge zu einem nicht dargestellten Mikrokontroller führen. Auch ist eine Resetleitung Reset mit diesem Mikrokontroller verbunden.

Der Spannungsteiler ist so mit seiner Versorgungsspannung Vcc (5V) und Bezugspotential GND verbunden, dass sich an den drei Anzapfungspunkten unterschiedliche Spannungen ergeben. Durch geeignete Wahl der Widerstandswerte von R13 bis R16 lassen sich beispielsweise eine obere (beispielsweise 4.8V), eine mittlere (beispielsweise 4.0V) und eine untere Spannungsschwelle (beispielsweise 0.2V) erzeugen.

Die Ausgänge der Komparatoren K3 bis K5 liegen dann auf Low, wenn die Referenzspannung Vref bei ca. 2,5V liegt, die um ±1V schwanken darf. Dies entspricht dem normalen Betriebsfall, also dem Diagnosezustand "kein Fehler".

Bei Leitungsunterbrechung wird die Referenzspannung Vref, getrieben durch den Strom aus Transistor Q1 des Stromspiegels Q1-Q2, auf ca. 4,3V ansteigen. Daraufhin schaltet K4 auf High-Pegel und dieser Wert wird in der Halteschaltung H abgespeichert und der Ausgang OW der Halteschaltung H nimmt ebenfalls High-Pegel an.

Bei Kurzschluss nach Batteriespannungspotential wird die Referenzspannung Vref durch die bereits beschriebene Schutzbeschaltung auf ca. 5,5V begrenzt. K3 und K4 schalten in diesem Fall auf High-Pegel, der in der Halteschaltung H gespeichert wird. Die Ausgänge SCB und OW nehmen High-Pegel an. Durch eine zusätzliche, nicht dargestellte, einfache Verknüpfungslogik lässt sich das Schalten von OW bei Kurzschuss nach Batteriespannung verhindern. Eine Unterdrückung von OW ist aber auch durch die Auswertesoftware im nachfolgenden Mikrokontroller möglich.

Bei Kurzschluss nach Bezugsspannungspotential wird der Wert der Referenzspannung Vref sehr klein werden, wodurch Komparator K5 auf High-Pegel schaltet. Dieser Pegel wird ebenfalls in der Halteschaltung H gespeichert und der Ausgang SCG nimmt High-Pegel an.

Der bereits erwähnte, aber nicht dargestellte Mikrokontroller kann nun die an den Ausgängen der Halteschaltung H liegenden Signalpegel SCB, OW und SCG abfragen und auswerten und daraus das Vorhandensein eines Fehlers und seine Art (Leitungsunterbrechung, Kurzschluss nach Batteriespannungspotential, Kurzschluss nach Bezugsspannungspotential) erkennen. Nach dem Auslesen dieser Signalpegel kann der Mikrokontroller die Halteschaltung H mittels der Leitung Reset wieder zurücksetzen.

Durch wiederholtes Auslesen der Signale SCB, OW und SCG mit jeweils anschließendem Zurücksetzen der Halteschaltung und Beobachtung des zeitlichen Verlaufes der Signalpegel ist auch eine Unterscheidung zwischen echten, permanenten Fehlern und sporadischen - möglicherweise durch Störspannungen verursachten Scheinfehlern möglich.

## Patentansprüche

1. Auswerteschaltung für einen induktiven Sensor (1), insbesondere für einen Sensor zur Erfassung des Drehverhaltens der Kurbelwelle einer Kraftfahrzeug-Brennkraftmaschine,
- mit einer Konstantstromquelle (2) zur Fremderregung des Sensors mittels eines Konstantstroms,
- mit einem Transkonduktanzverstärker (3, A1), dessen invertierendem Eingang das Ausgangssignal (s1) des Sensors (1) zugeführt wird, und dessen Ausgangssignal in einem invertierenden Tiefpass (A2) zu einer Referenzspannung (Vref) umgeformt wird, die dem nichtinvertierenden Eingang des Transkonduktanzverstärkers (A1) zugeführt wird,
- mit einer Digitalisierungsschaltung (4), die einen Schmitt-Trigger (K1) und parallel dazu einen Spannungskomparator (K2) aufweist, denen beiden das Ausgangssignal (s2) des Transkonduktanzverstärkers (A1) und die Referenzspannung (Vref) zugeführt werden, und wobei der Schmitt-Trigger (K1) ein hysteresebehaftetes Ausgangssignal (k1) und der Spannungskomparator (K2) ein nicht hysteresebehaftetes Ausgangssignal (k2) ausgibt, und
- mit einer Logikschaltung (5), die aus den beiden Ausgangssignalen (k1, k2) der Digitalisierungsschaltung (4) ein nicht hysteresebehaftetes Ausgangssignal (Out) der Auswerteschaltung bildet und zur Weiterverarbeitung zur Verfügung stellt.

2. Auswerteschaltung nach Anspruch 1, **dadurch gekennzeichnet, dass** die Logikschaltung (5) zwei Inverter (N1, N2) und vier NAND-Gatter (U1 bis U4) aufweist,
- dass der Eingang des ersten Inverters (N1) und ein Eingang des zweiten NAND-Gatters (U2) mit dem Ausgang des Schmitt-Triggers (K1) verbunden sind,
- dass der Eingang des zweiten Inverters (N2) und der andere Eingang des zweiten NAND-Gatters (U2) mit dem Ausgang des Spannungskomparators (K2) verbunden sind,
- dass der Ausgang des ersten Inverters (N1) mit einem Eingang des ersten NAND-Gatters (U1) verbunden ist, und der Ausgang des zweiten Inverters (N2) mit dem anderen Eingang des ersten Inverters (U1) verbunden ist,
- dass der Ausgang des ersten NAND-Gatters (U1) mit einem Eingang des dritten NAND-Gatters (U3) und der Ausgang des zweiten NAND-Gatters (U2) mit einem Eingang des vierten NAND-Gatters (U4) verbunden ist, und
- dass das dritte und vierte NAND-Gatter (U3, U4) ein transparentes RSFlip-Flop bilden, indem der Ausgang des vierten NAND-Gatters (U4) mit dem anderen Eingang des dritten NAND-Gatters (U3) und der Ausgang des dritten NAND-Gatters (U3), an dem das Ausgangssignal (Out) des Sensorsystems zur Weiterverarbeitung abgreifbar ist, mit dem anderen Eingang des vierten NAND-Gatters (U4) verbunden ist.

3. Auswerteschaltung nach Anspruch 1, **dadurch gekennzeichnet,**
- **dass** eine obere (oS), eine mittlere (mS) und eine untere Spannungsschwelle (uS) vorgegeben sind,
- **dass** eine Leitungsunterbrechung erkannt wird, wenn die Referenzspannung (Vref) die mittlere Spannungsschwelle (mS) überschreitet,
- **dass** ein Kurzschluss nach Batteriespannungspotential erkannt wird, wenn die Referenzspannung (Vref) die obere Spannungsschwelle (oS) überschreitet, und
- **dass** ein Kurzschluss nach Bezugsspannungspotential (GND) erkannt wird, wenn die Referenzspannung (Vref) die untere Spannungsschwelle (uS) unterschreitet.

4. Auswerteschaltung nach Anspruch 3, **dadurch gekennzeichnet,**
**dass** ein zwischen einer Versorgungsspannung (Vcc) und Bezugsspannungspotential (GND) liegender Spannungsteiler (R13 bis R16) zur Bildung der oberen (oS), der mittleren (mS) und der unteren Spannungsschwelle (uS) vorgesehen ist,
**dass** ein Spannungskomparator (K3) vorgesehen ist, in welchem die Referenzspannung (Vref) mit der oberen Spannungsschwelle (oS) verglichen wird,
**dass** ein Spannungskomparator (K4) vorgesehen ist, in welchem die Referenzspannung (Vref) mit der mittleren Spannungsschwelle (mS) verglichen wird,
**dass** ein Spannungskomparator (K5) vorgesehen ist, in welchem die Referenzspannung (Vref) mit der unteren Spannungsschwelle (uS) verglichen wird, und
**dass** die Pegel der Ausgangssignale der Spannungskomparatoren (K3 bis K5), welche Low sind, wenn die Referenzspannung (Vref) die mittlere und obere Spannungsschwelle (mS, oS) nicht überschreitet oder die untere Spannungsschwelle (uS) nicht unterschreitet, in einer Halteschaltung (H) gespeichert werden, aus der sie zur Weiterverarbeitung abrufbar und durch ein Resetsignal (Reset) löschbar sind.

## Claims

1. Analytical circuit for an inductive sensor (1), in particular for a sensor for sensing the rotational behaviour of the crankshaft of a motor vehicle internal combustion engine,
- having a constant current source (2) for external excitation of the sensor by means of a constant current,
- having a transconductance amplifier (3, A1) to whose inverting input the output signal (s1) of the sensor (1), and whose output signal is converted in an inverting lowpass (A2) into a reference voltage (Vref) which is supplied to the non-inverting input of the transconductance amplifier (A1),
- having a digitizing circuit (4) which has a Schmitt trigger (K1) and, in parallel with it, a voltage comparator (K2), to both of which the output signal (s2) of the transconductance amplifier (A1) and the reference voltage (Vref) are supplied, and whereby the Schmitt trigger (K1) outputs a hysteresis-affected output signal (k1) and the voltage comparator (K2) outputs a hysteresis-free output signal (k2), and
- having a logic circuit (5) which forms a hysteresis-free output signal (Out) of the analytical circuit from the two output signals (k1, k2) of the digitizing circuit (4) and makes it available for further processing.

2. Analytical circuit according to claim 1, **characterized in that** the logic circuit (5) has two inverters (N1, N2) and four NAND gates (U1 to U4),
- that the input of the first inverter (N1) and one input of the second NAND gate (U2) are connected to the output of the Schmitt trigger (K1),
- that the input of the second inverter (N2) and the other input of the second NAND gate (U2) are connected to the output of the voltage comparator (K2),
- that the output of the first inverter (N1) is connected to one input of the first NAND gate (U1), and the output of the second inverter (N2) is connected to the other input of the first inverter (U1),
- that the output of the first NAND gate (U1) is connected to an input of the third NAND gate (U3) and the output of the second NAND gate (U2) is connected to an input of the fourth NAND gate (U4), and
- that the third and fourth NAND gates (U3, U4) form a transparent RS flip-flop, whereby the output of the fourth NAND gate (U4) is connected to the other input of the third NAND gate (U3) and the output of the third NAND gate (U3) at which the output signal (Out) of the sensor system can be tapped for further processing is connected to the other input of the fourth NAND gate (U4).

3. The analytical circuit according to claim 1, **characterized in that**
- an upper (oS), a middle (mS) and a lower (uS) voltage threshold are predefined,
- that a line break is detected when the reference voltage (Vref) exceeds the middle voltage threshold (mS),
- that a short circuit to battery voltage potential is detected when the reference voltage (Vref) exceeds the upper voltage threshold (oS), and
- that a short circuit to reference voltage potential (GND) is detected when the reference voltage (Vref) exceeds the lower voltage threshold (uS).

4. The analytical circuit according to claim 3, **characterized in that**
- a voltage divider (R13 to R16) located between a supply voltage (Vcc) and reference voltage potential (GND) is provided for forming the upper (oS), middle (mS) and lower (uS) voltage threshold,
- that a voltage comparator (K3) is provided in which the reference voltage (Vref) is compared with the upper voltage threshold (oS),
- that a voltage comparator (K4) is provided in which the reference voltage (Vref) is compared with the middle voltage threshold (mS),
- that a voltage comparator (K5) is provided in which the reference voltage (Vref) is compared with the lower voltage threshold (uS), and
- that the levels of the output signals of the voltage comparators (K3 to K5) which are low when the reference voltage (Vref) does not exceed the middle and upper voltage threshold (mS, oS) or does not fall below the lower voltage threshold (uS) are stored in a holding circuit (H) from which they can be retrieved for further processing and can be cleared by means of a reset signal (Reset).

## Revendications

1. Circuit d'évaluation d'un capteur inductif (1), en particulier d'un capteur pour détecter les conditions de rotation du vilebrequin d'un moteur à combustion interne d'un véhicule automobile, comprenant
- une source de courant constant (2) pour l'excitation indépendante du capteur,
- un amplificateur de transconductance (3, A1) dont l'entrée inverseuse reçoit le signal de sortie (s1) du capteur (1) et dont le signal de sortie est transformé dans un passe-bas inverseur (A2) en une tension de référence (Vref) qui est envoyée à l'entrée non inverseuse de l'amplificateur de transconductance (A1),
- un circuit de numérisation (4) comprenant un trigger de Schmitt (K1) et, en parallèle à celui-ci, un comparateur de tension (K2), qui reçoivent tous deux le signal de sortie (s2) de l'amplificateur de transconductance (A1) et la tension de référence (Vref), le trigger de Schmitt (K1) fournissant un signal de sortie avec hystérèse (k1) et le comparateur de tension (K2) un signal de sortie sans hystérèse (k2), et
- un circuit logique (5) qui forme, à partir des deux signaux de sortie (k1, k2) du circuit de numérisation (4), un signal de sortie sans hystérèse (Out) du circuit d'évaluation, signal qu'il tient à disposition en vue d'un traitement ultérieur.

2. Circuit d'évaluation selon la revendication 1, **caractérisé en ce que** le circuit logique (5) comprend deux inverseurs (N1, N2) et quatre portes NON-ET (U1 à U4),
- que l'entrée du premier inverseur (N1) et une entrée de la deuxième porte NON-ET (U2) sont reliées à la sortie du trigger de Schmitt (K1),
- que l'entrée du deuxième inverseur (N2) et l'autre entrée de la deuxième porte NON-ET (U2) sont connectées à la sortie du comparateur de tension (K2),
- que la sortie du premier inverseur (N1) est connectée à une entrée de la première porte NON-ET (U1) et la sortie du deuxième inverseur (N2) est reliée à l'autre entrée du premier inverseur (U1),
- que la sortie de la première porte NON-ET (U1) est connectée à une entrée de la troisième porte NON-ET (U3) et la sortie de la deuxième porte NON-ET (U2) est reliée à une entrée de la quatrième porte NON-ET (U4), et
- que les troisième et quatrième portes NON-ET (U3, U4) forment une bascule SR transparente par une connexion de la quatrième porte NON-ET (U4) à l'autre entrée de la troisième porte NON-ET (U3), et une connexion de la sortie de la troisième porte NON-ET (U3) où le signal de sortie (Out) du système de capteur peut être prélevé pour un traitement ultérieur, à l'autre entrée de la quatrième porte NON-ET (U4).

3. Circuit d'évaluation selon la revendication 1, **caractérisé en ce**
- **qu'**un seuil supérieur (oS), un seuil moyen (mS) et un seuil inférieur (uS) de tension sont prédéfinis,
- **qu'**une coupure de ligne est reconnue lorsque la tension de référence (Vref) dépasse le seuil moyen de tension (mS),
- **qu'**un court-circuit vers le potentiel de la batterie est reconnu lorsque la tension de référence (Vref) dépasse le seuil supérieur de tension (oS), et
- **qu'**un court-circuit vers le potentiel de référence (GND) est reconnu lorsque la tension de référence (Vref) dépasse le seuil inférieur de tension (uS) vers le bas.

4. Circuit d'évaluation selon la revendication 3, **caractérisé en ce**
- **qu'**un diviseur de tension (R13 à R16) situé entre une tension d'alimentation (Vcc) et le potentiel de référence (GND) est prévu pour former le seuil de tension supérieur (oS), moyen (mS) et inférieur (uS),
- **qu'**un comparateur de tension (K3) est prévu dans lequel la tension de référence (Vref) est comparée avec le seuil de tension supérieur (oS),
- **qu'**un comparateur de tension (K4) est prévu dans lequel la tension de référence (Vref) est comparée avec le seuil de tension moyen (mS),
- **qu'**un comparateur de tension (K5) est prévu dans lequel la tension de référence (Vref) est comparée avec le seuil de tension inférieur (uS), et
- **que** les niveaux des signaux de sortie des comparateurs de tension (K3 à K5), qui sont bas lorsque la tension de référence (Vref) ne dépasse pas les seuils de tension moyen et supérieur (mS, oS) ou ne dépasse pas le seuil de tension inférieur (uS) vers le bas, sont enregistrés dans un circuit de maintien (H) duquel les signaux peuvent être prélevés aux fins d'un traitement ultérieur, ou supprimés par un signal de remise à l'état initial (Reset).
